# EUROPÄISCHE PATENTSCHRIFT

(11) **EP 2 724 039 B1**
(45) Veröffentlichungstag und Bekanntmachung des Hinweises auf die Patenterteilung: **13.05.2015**
(21) Anmeldenummer: 12729122.7
(22) Anmeldetag: 22.06.2012
(51) Int. Cl.: F16C 33/38, F16C 33/46, F16C 33/66

(54) **WÄLZLAGERKÄFIG**
ROLLING BEARING CAGE
CAGE DE PALIER À ROULEMENT

(30) Priorität: 22.06.2011 DE 102011077935
(43) Veröffentlichungstag der Anmeldung: 30.04.2014
(73) Patentinhaber: Aktiebolaget SKF, 415 50 Göteborg (SE)
(72) Erfinder: SCHNABL, Gregor, A-4400 Steyr (AT); SCHWEITZER, Ferdinand, A-3352 St. Peter in der Au (AT)
(74) Vertreter: Kuhstrebe, Jochen
(86) Internationale Anmeldenummer: PCT/EP2012/062044
(87) Internationale Veröffentlichungsnummer: WO 2012/175649

(56) Entgegenhaltungen:
- DE-A1- 10 353 098
- DE-B- 1 012 781
- JP-A- 2008 256 201
- US-A- 3 537 766
- US-A- 4 056 293

## Beschreibung

Die Erfindung betrifft einen Wälzlagerkäfig, in dessen ringförmiger Grundkontur eine Anzahl Aufnahmetaschen für Wälzkörper angeordnet ist, wobei jede Aufnahmetasche konkav geformte Flächenbereiche aufweist, die der konvexen Außenkontur des Wälzkörpers angepasst sind, wobei in die konkav geformten Flächenbereiche mindestens eine Vertiefung eingebracht ist, wobei sich die mindestens eine Vertiefung über eine vorgegebene Erstreckung entlang des konkav geformten Flächenbereichs ausdehnt.

Es sind Wälzlagerkäfige bekannt, bei denen in einen ringförmigen Grundkörper Aufnahmetaschen eingebracht sind, die so ausgestaltet sind, dass sie die zu führenden Wälzkörper, gleich ob Kugeln oder Rollen, über einen wesentlichen Teil ihres Umfangs führen. Die Aufnahmetaschen weisen hierzu Flächenbereiche auf, die konkav ausgeführt sind und der Form des zu führenden Wälzkörpers entsprechen. Hiermit ist es möglich, den Wälzkörper präzise zu führen und so das Betriebsverhalten des Wälzlagers positiv zu beeinflussen.

Ein hoher Umschlingungsgrad der Aufnahmetasche um den Wälzkörper ist also vorteilhaft. Nachteilig ist allerdings, dass die Empfindlichkeit gegenüber Verschmutzungen zunimmt. Der Grund hierfür ist, dass Schmutzpartikel aufgrund des eng anliegenden Flächenbereichs der Käfigtasche am Wälzkörper kaum Freiraum haben, genauso wenig wie Schmiermittel, das für einen optimalen Betrieb des Wälzlagers erforderlich ist.

Es hat sich weiter ergeben, dass sich aufgrund der dargelegten Situation auch das Geräuschverhalten, d. h. das Schwingungsverhalten des Lagers negativ entwickelt, wenn der Käfig mit Schmutzpartikeln beaufschlagt wird.

Aufgrund der geringen Depotmöglichkeiten für Schmierstoff (Fett) ergeben sich auch nachteilige Entwicklungen hinsichtlich der Gebrauchsdauer des Schmierstoffs; innerhalb des Umschlingungsbereichs ist hierfür zu wenig Schmiermittel vorhanden.

Ein gattungsgemäßer Wälzlagerkäfig ist aus der DE 10 12 781 B; aus der US 2011/0069918 A1, aus der US 5 806 990 A, aus der DE 20 2005 002 491 U1 und aus der JP 2001 280347 A bekannt. Weitere Lösungen zeigen die JP 2008 045711 A, die JP 2008 014428 A und die DE 2 105 761 A.

Der Erfindung liegt die Aufgabe zugrunde, einen gattungsgemäßen Wälzlagerkäfig zu schaffen, der zwar die Vorteile eines hohen und engen Umschlingungsgrads der Wälzkörper beibehält, der aber die genannten Nachteil nicht aufweist. Es soll also eine gute Führung der Wälzkörper durch den Käfig durch einen hohen Umschlingungsgrad erreicht werden, gleichzeitig aber auch eine gute Schmierstoffversorgung gegeben sein, so dass eine hohe Gebrauchsdauer möglich ist und ein gutes Betriebsverhalten, insbesondere hinsichtlich der Schwingungsentwicklung.

Die Lösung dieser Aufgabe durch die Erfindung ist dadurch gekennzeichnet, dass die mindestens eine Vertiefung in ihrem radial innenliegenden Endbereich mit einer im Radialschnitt schrägen Auslauffläche endet, wobei der Auslaufwinkel gegenüber der radialen Richtung zwischen 15° und 35° liegt, und dass die mindestens eine Vertiefung in ihrem radial außenliegenden Endbereich mit einer im Radialschnitt schrägen Auslauffläche endet, wobei der Auslaufwinkel gegenüber der radialen Richtung zwischen 5° und 25° liegt.

Die Aufnahmetasche kann zur Halterung eines Wälzkörpers in Form einer Kugel ausgebildet sein. In diesem Falle ist bevorzugt vorgesehen, dass in den Flächenbereich der Aufnahmetasche eine geschlossen umlaufende Vertiefung eingebracht ist (vorzugsweise nur eine einzige Vertiefung).

Die Aufnahmetasche kann aber auch zur Halterung eines Wälzkörpers in Form einer zylinderförmigen, kegelförmigen oder tonnenförmigen Rolle ausgebildet sein. In diesem Falle ist bevorzugt vorgesehen, dass in zwei sich gegenüberliegenden Flächenbereichen eine gerade (linear) ausgebildete Vertiefung eingebracht ist, die in Richtung der Drehachse des Wälzlagerkäfigs verläuft.

Bevorzugt ist eine einzige Vertiefung in einem Flächenbereich eingebracht, wobei die Vertiefung ausgehend vom radial innenliegenden Radius des Wälzlagerkäfigs in einem Bereich zwischen 40 % und 80 % der radialen Höhenerstreckung des Wälzlagerkäfigs angeordnet ist.

Die mindestens eine Vertiefung kann des Weiteren gegenüber dem Flächenbereich eine maximale Tiefe zwischen 0,25 mm und 0,60 mm haben.

Der Auslaufwinkel im radial innenliegenden Endbereich liegt gegenüber der radialen Richtung bevorzugt zwischen 20° und 30°. Der Auslaufwinkel im radial außenliegenden Endbereich liegt gegenüber der radialen Richtung bevorzugt zwischen 10° und 20°.

Die Übergänge zwischen dem Flächenbereich und den Auslaufflächen bzw. zwischen dem Bodenbereich der Vertiefung und den Auslaufflächen kann zumindest teilweise ausgerundet ausgeführt sein.

Die Vertiefung wirkt also als "Schmutzrille" innerhalb des Umschlingungsbereichs der Käfigtasche, mit dem der Wälzkörper eng geführt werden kann. Das Geräuschverhalten lässt sich so wesentlich verbessern. Weiterhin kann eine erhöhte Fettgebrauchsdauer erreicht werden, da der Schmierstoff, insbesondere das Wälzlagerfett, im Bereich des Kugel- bzw. Rollenkontakts bleibt und aufgrund der Vertiefung hier deponiert wird und nicht außerhalb der radialen Erstreckung des Käfigs, d. h. außerhalb des Käfiginnendurchmessers bzw. Käfigaußendurchmessers, haften bleiben muss.

Es wird also durch die vorgeschlagene geometrische Gestaltung eine längere Fettgebrauchsdauer möglich. Durch die neue Geometrie können auch die Anforderungen an die Reinheit bzw. Sauberkeit der Lagerumgebung reduziert werden, da eine bessere Resistenz gegen Verschmutzung besteht. Das Geräuschniveau bleibt ebenfalls geringer.

In der Zeichnung sind Ausführungsbeispiele der Erfindung dargestellt. Es zeigen:
- Fig. 1: in perspektivischer Darstellung einen Abschnitt eines Käfigs eines Kugellagers,
- Fig. 2: den Schnitt durch den Abschnitt des Käfigs gemäß Fig. 1, gesehen in Richtung der Drehachse a,
- Fig. 3: den Schnitt durch den Abschnitt des Käfigs gemäß Fig. 1, gesehen in Richtung senkrecht zur Drehachse a,
- Fig. 4: in perspektivischer Darstellung einen Abschnitt eines Käfigs eines Zylinderrollenlagers und
- Fig. 5: den Schnitt durch den Abschnitt des Käfigs gemäß Fig. 4, gesehen in Richtung der Drehachse a.

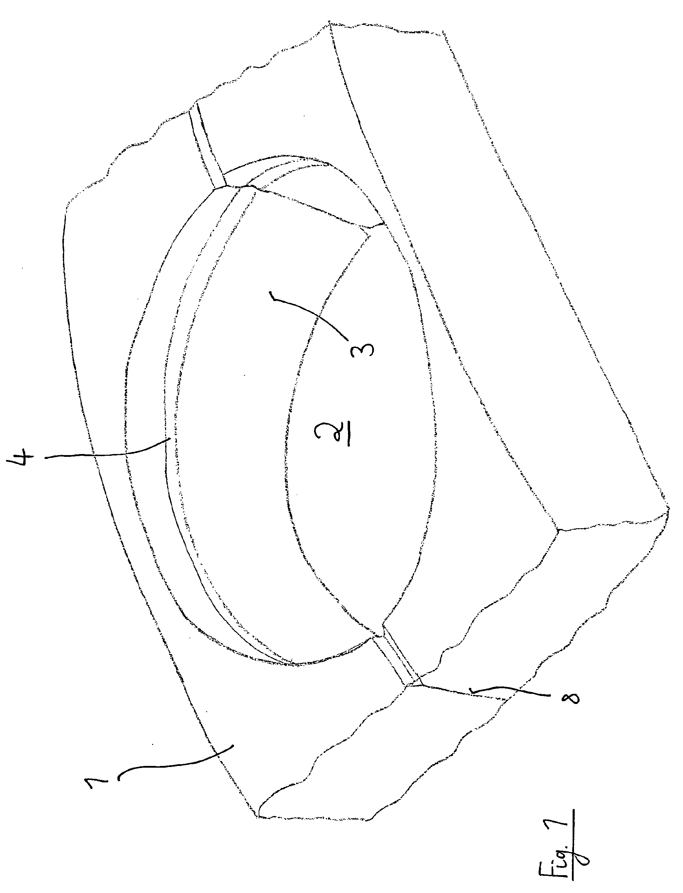

In Fig. 1 ist ein Abschnitt eines Wälzlagerkäfigs 1 eines Kugellagers dargestellt. Der Wälzlagerkäfig 1 hat eine im Wesentlichen ringförmige, d. h. hohlzylindrische Kontur, in die in bekannter Weise Aufnahmetaschen 2 für die (nicht dargestellten) Kugeln eingearbeitet sind. Der Wälzlagerkäfig 1 ist hier geteilt ausgeführt und setzt sich aus zwei Ringteilen zusammen, die über eine Grenzfläche 8 aneinander liegen und die nach ihrem Verbinden die Kugeln in den Aufnahmetaschen 2 halten. Jede Aufnahmetasche 2 hat einen Flächenbereich 3, der eine konkave Grundform aufweist und ausgebildet ist, die (konvexe) Kugel mit einem Teil ihrer Oberfläche zu umfassen. Zur guten Führung der Kugeln durch den Käfig 1 liegt nur ein geringer Spalt zwischen dem Flächenbereich 3 und der Oberfläche der Kugel vor.

Damit trotz dieser engen Führung die Schmierstoffversorgung in der Aufnahmetasche 2 optimal gewährleistet ist, ist in die konkav geformten Flächenbereiche 3 eine Vertiefung 4 eingebracht. Diese dehnt sich über eine vorgegebene Erstreckung entlang des konkav geformten Flächenbereichs 3 aus. Im Ausführungsbeispiel nach Fig. 1 läuft die Vertiefung 4 um den Umfang des Flächenbereichs 3 ringförmig um.

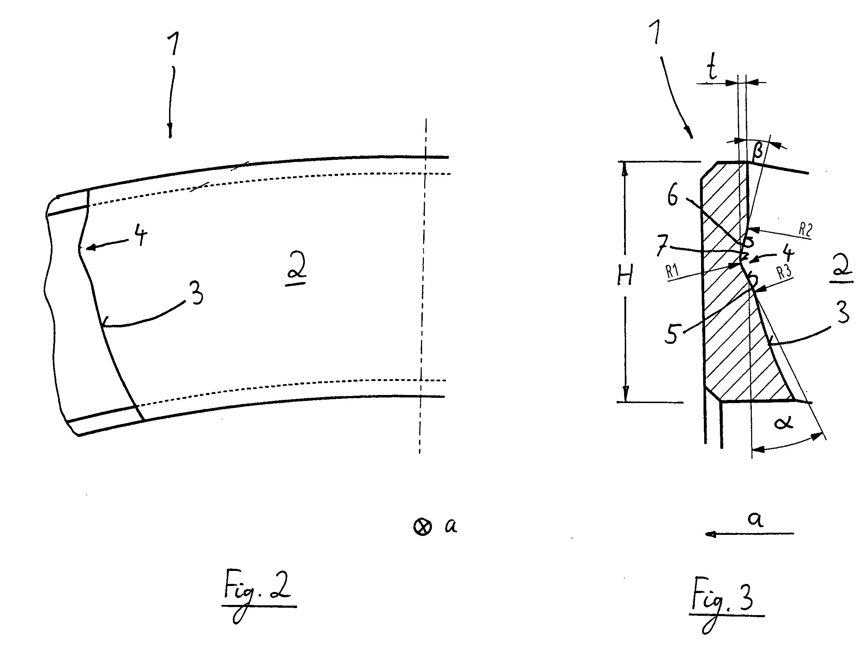

Die genaue Ausgestaltung der Vertiefung 4 ist in den Figuren 2 und 3 für zwei zueinander senkrechte Schnitte zu sehen. Der Wälzlagerkäfig 1 hat eine Drehachse a, um die er während des Betriebs des Lagers dreht.

Die Vertiefung 4 hat einen Bodenbereich 7 der die größte Tiefe t von der Oberfläche des Flächenbereichs 3 aufweist. Diese Tiefe liegt im Ausführungsbeispiel bei ca. 0,4 mm. Vom Bodenbereich 7 aus erstreckt sich die Vertiefung 4 mit zwei Auslaufflächen 5 und 6 radial nach innen bzw. außen, wobei die Auslaufflächen 5 und 6 unter unterschiedlichen Winkeln α und β zur radialen Richtung verlaufen. Der Winkel α ist dabei größer als der Winkel β.

Die einzige Vertiefung 4 liegt im Ausführungsbeispiel bei einer Höhe, die im Höhenbereich von ca. 60 % der Höhenerstreckung H des Wälzlagerkäfigs 1 liegt, gerechnet ab dem radial innenliegenden Ende des Wälzlagerkäfigs 1. Demgemäß ist die Vertiefung also etwas oberhalb des Teilkreises (Mitte der Höhenerstreckung H) des Wälzlagerkäfigs 1 angeordnet, vorzugsweise im Bereich zwischen 50 % und 70 % der Höhenerstreckung H vom radial innenliegenden Ende.

Mit den Radien R1, R2 und R3 ist angedeutet, dass die jeweiligen Übergänge zwischen den einzelnen Abschnitten der Vertiefung gerundet ausgebildet sind.

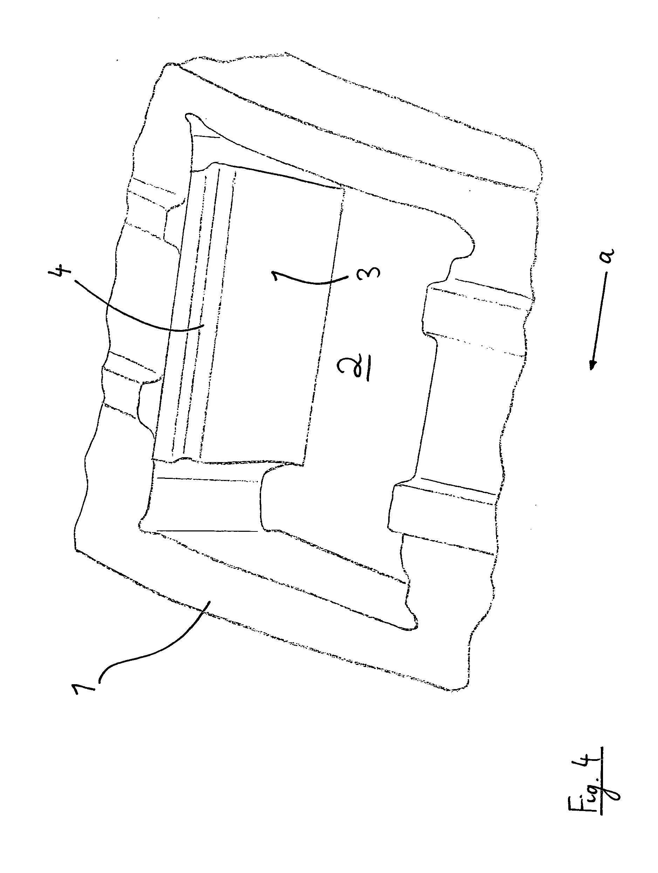

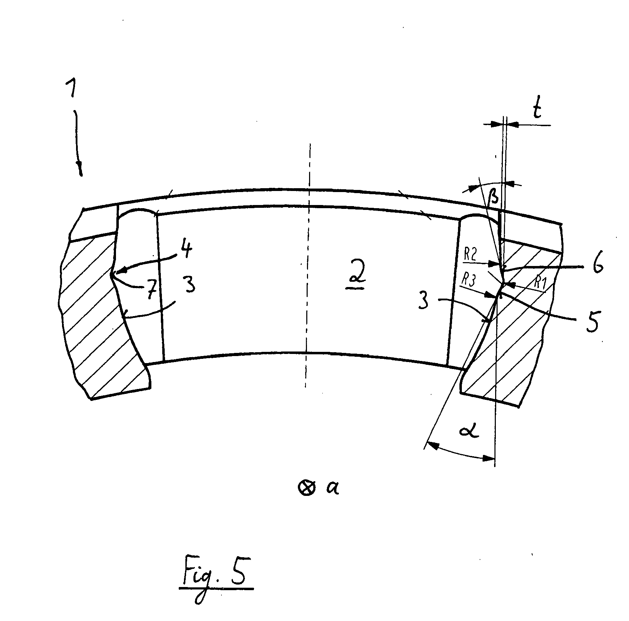

In den Figuren 4 und 5 ist ein anderes Ausführungsbeispiel eines Wälzlagerkäfigs 1 dargestellt, der hier für ein Zylinderrollenlager vorgesehen ist. Demgemäß sind die Ausnahmetaschen 2 hier rechteckförmig ausgebildet, wobei zwei einander zugewandte Flächenbereiche 3 konkave Flächen bilden, die die Rolle eng führend über einen Teil ihres Umfangs umfassen.

Für die geometrischen Verhältnisse - s. insbesondere Fig. 5 - gilt das Analoge, wie zu Fig. 2 und 3 ausgeführt.

Die Vertiefung 4 bildet in allen Fällen einen Aufnahmeraum für Schmierfett, so dass eine einwandfreie Schmierung der Wälzkörper im Betrieb des Lagers sichergestellt ist.

### Bezugszeichenliste

- 1: Wälzlagerkäfig
- 2: Aufnahmetasche
- 3: Flächenbereich
- 4: Vertiefung
- 5: Auslauffläche
- 6: Auslauffläche
- 7: Bodenbereich
- 8: Grenzfläche

- a: Drehachse
- H: Höhenerstreckung
- t: Tiefe
- α: Auslaufwinkel
- β: Auslaufwinkel
- R1: Radius
- R2: Radius
- R3: Radius

## Patentansprüche

1. Wälzlagerkäfig (1), in dessen ringförmiger Grundkontur eine Anzahl Aufnahmetaschen (2) für Wälzkörper angeordnet ist, wobei jede Aufnahmetasche (2) konkav geformte Flächenbereiche (3) aufweist, die der konvexen Außenkontur des Wälzkörpers angepasst sind, wobei in die konkav geformten Flächenbereiche (3) mindestens eine Vertiefung (4) eingebracht ist, wobei sich die mindestens eine Vertiefung (4) über eine vorgegebene Erstreckung entlang des konkav geformten Flächenbereichs (3) ausdehnt,
**dadurch gekennzeichnet,**
**dass** die mindestens eine Vertiefung (4) in ihrem radial innenliegenden Endbereich mit einer im Radialschnitt schrägen Auslauffläche (5) endet, wobei der Auslaufwinkel (α) gegenüber der radialen Richtung zwischen 15° und 35° liegt, und
**dass** die mindestens eine Vertiefung (4) in ihrem radial außenliegenden Endbereich mit einer im Radialschnitt schrägen Auslauffläche (6) endet, wobei der Auslaufwinkel (β) gegenüber der radialen Richtung zwischen 5° und 25° liegt.

2. Wälzlagerkäfig nach Anspruch 1, **dadurch gekennzeichnet, dass** die Aufnahmetasche (2) zur Halterung eines Wälzkörpers in Form einer Kugel ausgebildet ist.

3. Wälzlagerkäfig nach Anspruch 2, **dadurch gekennzeichnet, dass** in den Flächenbereich (3) der Aufnahmetasche (2) eine geschlossen umlaufende Vertiefung (4) eingebracht ist.

4. Wälzlagerkäfig nach Anspruch 1, **dadurch gekennzeichnet, dass** die Aufnahmetasche (2) zur Halterung eines Wälzkörpers in Form einer zylinderförmigen, kegelförmigen oder tonnenförmigen Rolle ausgebildet ist.

5. Wälzlagerkäfig nach Anspruch 4, **dadurch gekennzeichnet, dass** in zwei sich gegenüberliegenden Flächenbereichen (3) eine gerade ausgebildete Vertiefung (4) eingebracht ist, die in Richtung der Drehachse (a) des Wälzlagerkäfigs (1) verläuft.

6. Wälzlagerkäfig nach einem der Ansprüche 1 bis 5, **dadurch gekennzeichnet, dass** eine einzige Vertiefung (4) in einem Flächenbereich (3) eingebracht ist, wobei die Vertiefung ausgehend vom radial innenliegenden Radius des Wälzlagerkäfigs (1) in einem Bereich zwischen 40 % und 80 % der radialen Höhenerstreckung (H) des Wälzlagerkäfigs (1) angeordnet ist.

7. Wälzlagerkäfig nach einem der Ansprüche 1 bis 6, **dadurch gekennzeichnet, dass** die mindestens eine Vertiefung (4) gegenüber dem Flächenbereich (3) eine maximale Tiefe (t) zwischen 0,25 mm und 0,60 mm hat.

8. Wälzlagerkäfig nach einem der Ansprüche 1 bis 7, **dadurch gekennzeichnet, dass** der Auslaufwinkel (α) im radial innenliegenden Endbereich gegenüber der radialen Richtung zwischen 20° und 30° liegt.

9. Wälzlagerkäfig nach einem der Ansprüche 1 bis 8, **dadurch gekennzeichnet, dass** der Auslaufwinkel (β) im radial außenliegenden Endbereich gegenüber der radialen Richtung zwischen 10° und 20° liegt.

10. Wälzlagerkäfig nach einem der Ansprüche 1 bis 9, **dadurch gekennzeichnet, dass** die Übergänge zwischen dem Flächenbereich (3) und den Auslaufflächen (5, 6) sowie zwischen dem Bodenbereich (7) der Vertiefung (4) und den Auslaufflächen (5, 6) zumindest teilweise ausgerundet (R1, R2, R3) ausgeführt sind.

## Claims

1. Anti-friction bearing cage (1), in the annular base contour of which a number of holding pockets (2) for rolling bodies are arranged, each holding pocket (2) having concavely shaped surface regions (3) which are adapted to the convex outer contour of the rolling body, at least one depression (4) being made in the concavely shaped surface regions (3), the at least one depression (4) running over a predefined extent along the concavely shaped surface region (3), **characterized in that** the at least one depression (4) ends in its end region which lies radially on the inside with a levelling-off face (5) which is oblique in radial section, the levelling-off angle (α) lying between 15° and 35° with respect to the radial direction, and **in that** the at least one depression (4) ends in its end region which lies radially on the outside with a levelling-off face (6) which is oblique in radial section, the levelling-off angle (β) lying between 5° and 25° with respect to the radial direction.

2. Anti-friction bearing cage according to Claim 1, **characterized in that** the holding pocket (2) is configured for holding a rolling body in the form of a ball.

3. Anti-friction bearing cage according to Claim 2, **characterized in that** a self-contained circumferential depression (4) is made in the surface region (3) of the holding pocket (2).

4. Anti-friction bearing cage according to Claim 1, **characterized in that** the holding pocket (2) is configured for holding a rolling body in the form of a cylindrical, conical or barrel-shaped roller.

5. Anti-friction bearing cage according to Claim 4, **characterized in that** a depression (4) of straight configuration which runs in the direction of the rotational axis (a) of the anti-friction bearing cage (1) is made in two surface regions (3) which lie opposite one another.

6. Anti-friction bearing cage according to one of Claims 1 to 5, **characterized in that** a single depression (4) is made in a surface region (3), the depression being arranged, starting from the radially inner radius of the anti-friction bearing cage (1), in a range between 40% and 80% of the radial height (H) of the anti-friction bearing cage (1).

7. Anti-friction bearing cage according to one of Claims 1 to 6, **characterized in that** the at least one depression (4) has a maximum depth (t) of between 0.25 mm and 0.60 mm with respect to the surface region (3).

8. Anti-friction bearing cage according to one of Claims 1 to 7, **characterized in that** the levelling-off angle (α) in the end region which lies radially on the inside lies between 20° and 30° with respect to the radial direction.

9. Anti-friction bearing cage according to one of Claims 1 to 8, **characterized in that** the levelling-off angle (β) in the end region which lies radially on the outside lies between 10° and 20° with respect to the radial direction.

10. Anti-friction bearing cage according to one of Claims 1 to 9, **characterized in that** the transitions between the surface region (3) and the levelling-off faces (5, 6) and between the bottom region (7) of the depression (4) and the levelling-off faces (5, 6) are of at least partially rounded (R1, R2, R3) configuration.

## Revendications

1. Cage de palier à roulement (1), dans le contour de base annulaire de laquelle sont disposées un certain nombre de cavités de réception (2) pour des corps de roulement, chaque cavité de réception (2) comprenant des régions de surface (3) de forme concave qui sont adaptées au contour extérieur convexe du corps de roulement, au moins un évidement (4) étant ménagé dans les régions de surface (3) de forme concave, l'au moins un évidement (4) s'étendant sur une étendue prédéfinie le long de la région de surface (3) de forme concave,
**caractérisée**
**en ce que** l'au moins un évidement (4) se termine, dans sa région d'extrémité située radialement à l'intérieur, par une surface de sortie (5) inclinée en coupe radiale, l'angle de sortie (α) se situant entre 15° et 35° par rapport à la direction radiale, et
**en ce que** l'au moins un évidement (4) se termine, dans sa région d'extrémité située radialement à l'extérieur, par une surface de sortie (6) inclinée en coupe radiale, l'angle de sortie (β) se situant entre 5° et 25° par rapport à la direction radiale.

2. Cage de palier à roulement selon la revendication 1, **caractérisée en ce que** la cavité de réception (2) est réalisée pour retenir un corps de roulement sous la forme d'une bille.

3. Cage de palier à roulement selon la revendication 2, **caractérisée en ce qu'**un évidement périphérique fermé (4) est ménagé dans la région de surface (3) de la cavité de réception (2).

4. Cage de palier à roulement selon la revendication 1, **caractérisée en ce que** la cavité de réception (2) est réalisée pour retenir un corps de roulement sous la forme d'un rouleau cylindrique, conique ou en forme de tonneau.

5. Cage de palier à roulement selon la revendication 4, **caractérisée en ce qu'**un évidement (4) réalisé de manière rectiligne est ménagé dans deux régions de surface (3) en regard, lequel évidement s'étend dans la direction de l'axe de rotation (a) de la cage de palier à roulement (1).

6. Cage de palier à roulement selon l'une quelconque des revendications 1 à 5, **caractérisée en ce qu'**un évidement unique (4) est ménagé dans une région de surface (3), l'évidement étant disposé, à partir du rayon situé radialement à l'intérieur de la cage de palier à roulement (1), dans une région entre 40 % et 80 % de l'étendue en hauteur radiale (H) de la cage de palier à roulement (1).

7. Cage de palier à roulement selon l'une quelconque des revendications 1 à 6, **caractérisée en ce que** l'au moins un évidement (4) présente par rapport à la région de surface (3) une profondeur maximale (t) entre 0,25 mm et 0,60 mm.

8. Cage de palier à roulement selon l'une quelconque des revendications 1 à 7, **caractérisée en ce que** l'angle de sortie (α) dans la région d'extrémité située radialement à l'intérieur se situe entre entre 20° et 30° par rapport à la direction radiale.

9. Cage de palier à roulement selon l'une quelconque des revendications 1 à 8, **caractérisée en ce que** l'angle de sortie (β) dans la région d'extrémité située radialement à l'extérieur se situe entre 10° et 20° par rapport à la direction radiale.

10. Cage de palier à roulement selon l'une quelconque des revendications 1 à 9, **caractérisée en ce que** les transitions entre la région de surface (3) et les surfaces de sortie (5, 6) ainsi qu'entre la région de fond (7) de l'évidement (4) et les surfaces de sortie (5, 6) sont réalisées de manière au moins partiellement arrondie (R1, R2, R3).
